# EUROPEAN PATENT SPECIFICATION

(11) **EP 0 480 682 B1**
(45) Date of publication and mention of the grant of the patent: **11.12.1996**
(21) Application number: 91309227.6
(22) Date of filing: 08.10.1991
(51) Int. Cl.: G11B 27/30, G11B 27/031

(54) **Digital audio signal recording apparatus**
Aufzeichhnungsgerät für digitale Tonsignale
Appareil d'enregistrement des signaux audio numériques

(30) Priority: 09.10.1990 JP 271998/90
(43) Date of publication of application: 15.04.1992
(73) Proprietor: PIONEER ELECTRONIC CORPORATION, Meguro-ku Tokyo 153 (JP)
(72) Inventor: Yoshimura, Ryuichiro, Tokorozawa-City, Saitama (JP)
(74) Representative: Luckhurst, Anthony Henry William

(56) References cited:
- EP-A- 0 187 029
- PATENT ABSTRACTS OF JAPAN vol. 13, no. 590 (P-984)26 December 1989 & JP-A-1 251 361
- PATENT ABSTRACTS OF JAPAN vol. 14, no. 179 (P-1034)10 April 1990 & JP-A-2 027 579
- PATENT ABSTRACTS OF JAPAN vol. 11, no. 40 (P-544)5 February 1987 & JP-A-61 208 655
- PATENT ABSTRACTS OF JAPAN vol. 10, no. 12 (P-421)17 January 1986 & JP-A-60 167 163
- PATENT ABSTRACTS OF JAPAN vol. 14, no. 116 (P-1016)5 March 1990 & JP-A-1 312 793

## Description

### 1. Field of the Invention

The invention relates to a recording apparatus for recording a plurality of programs (a series of audio information such as music programs; the same shall also apply hereinlater) and identification (ID) information including program number data corresponding to the programs onto a recording medium.

Recording media such as CD, DAT, etc. in which both of main codes indicative of a plurality of programs and subcodes indicative of ID information corresponding to the programs have been recorded in a predetermined format are well known.

The subcodes are constructed by eight bits and have channels of P, Q, R, S, T, U, V, and W. Among them, the P channel indicates a delimiter of the program and is encoded to "1" for an interval between programs and to "0" for the inside of the program. The Q channel indicates program number information, that is, information indicative of the number of program on the recording medium and time information indicative of a playing time of each program and the elapsed time from the beginning of the recording medium. The two P and Q channels are designated channels.

The other six channels are released for the user. It is permitted to use those six channels in order to record information such as graphics, audio, image, or the like.

When executing what is called a dubbing process such that the program information recorded on the recording medium is again recorded onto another unrecorded medium, there is a case where the user wants to record only the designated programs without recording all of the programs. In such a case, it is a problem that if the program number information is recorded as it is, the program numbers contained in recorded programs are discontinuous from each other or are not in order.

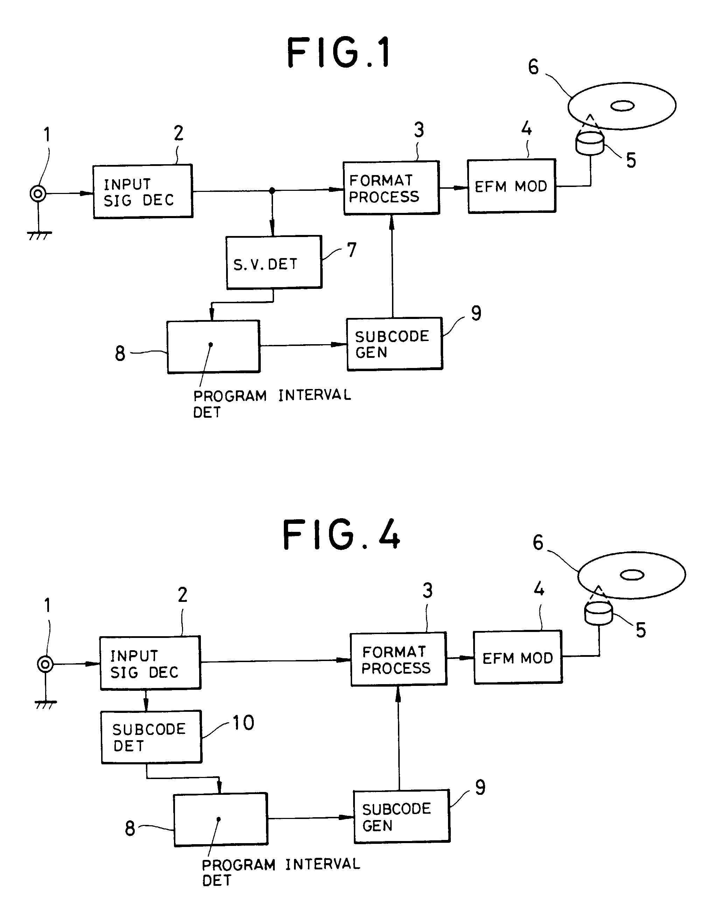

Fig. 1 shows a block diagram of a prior art. In the diagram, an input signal to be recorded is supplied from a terminal 1 to an input signal decoding circuit 2. Although the input signal has either one of various kinds of signal styles such as analog signal, digital signal, and the like, an EFM digital signal which has been what is called EFM modulated is used as an input signal here.

The EFM digital signal is demodulated by the input signal decoding circuit 2 and a digital audio signal (hereinafter, simply referred to as an audio signal) as a main code is extracted and supplied to a format processing circuit 3. An output of the format processing circuit 3 is again converted into an EFM digital signal by an EFM modulating circuit 4 and is recorded onto a disc 6 by a recording section 5 including a laser source and optical elements for irradiating a modulated laser beam.

The audio signal is also supplied to a sound volume detecting circuit 7 and a check is made to see if a sound volume level of the audio signal has changed by a predetermined value or more or not. If YES, an effective level signal is generated from the detecting circuit 7 to a program interval detecting circuit 8. When the detecting circuit 8 receives the effective level signal, the detecting circuit 8 determines that a present reproducing position is located at the head of the next program, so that a program number change command is given to a subcode producing circuit 9.

In accordance with the order of the program which is supplied on the basis of the program number change command, the subcode producing circuit 9 corrects the necessary data such as program number data, time data, and so on, and produces a new subcode. The new subcode generated from the subcode producing circuit 9 is supplied to the format processing circuit 3 and is formatted together with the digital audio signal and is EFM modulated. After that, the EFM modulated signal is recorded onto the disc 6. The recording signal recorded on the disc 6 has the program number data according to the order of the program to be recorded.

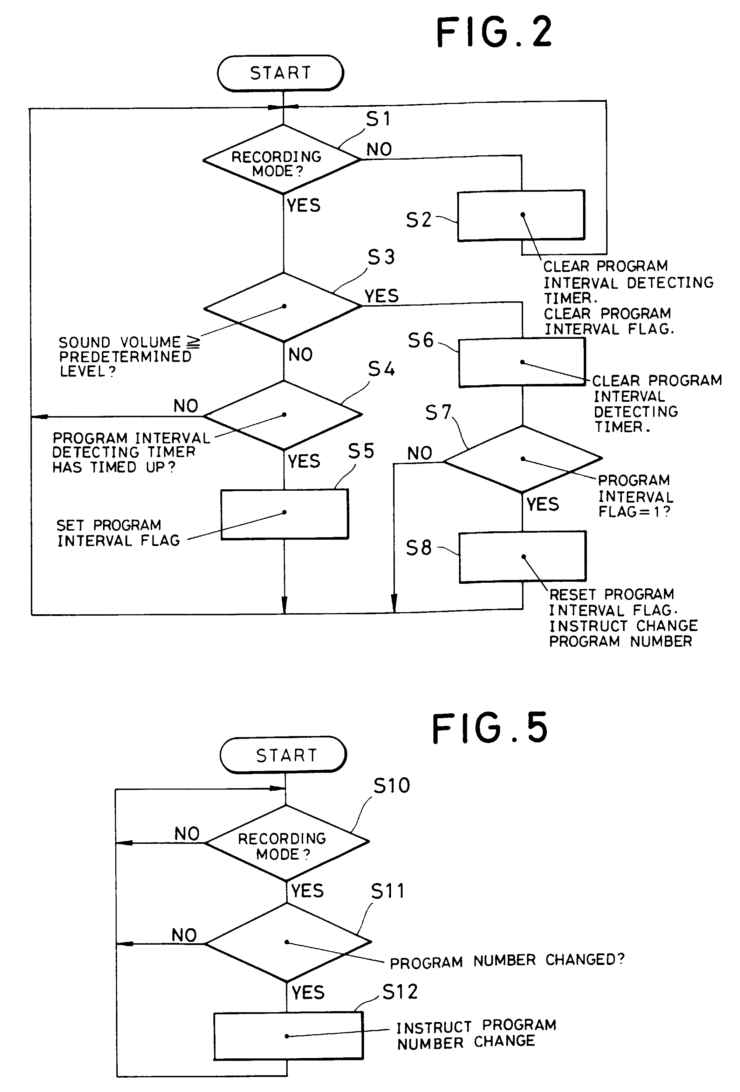

The operation of the program interval detecting circuit 8 in Fig. 1 will now be described with reference to a flowchart of Fig. 2.

The program interval detecting circuit 8 first discriminates whether the present operating mode is the recording mode or not (step S1). A program interval detecting timer and a program interval flag are continuously cleared so long as the operating mode is not the recording mode (step S2). In the recording mode, a check is made to see if the sound volume level is equal to or higher than a predetermined level or not on the basis of a signal from the sound volume detecting circuit 7 (step S3). If the sound volume level is less than the predetermined level, a check is made to see if the program interval detecting timer has timed up or not (step S4). If YES, the program interval flag is set (step S5). If it is determined that the sound volume level is equal to or higher than the predetermined level, the program interval detecting timer is cleared (step S6). A check is made to see if the program interval flag has already been set or not (step S7). If YES, the program interval flag is reset and a program number change command is supplied to the subcode producing circuit 9 (step S8).

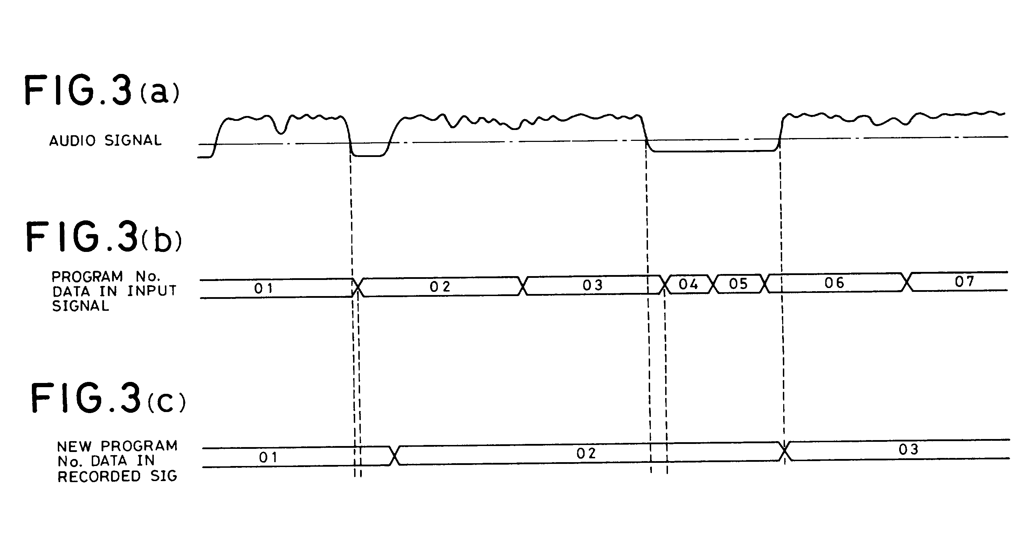

In the above prior art, there is a case where an interval between programs cannot be discriminated in dependence on the content of the program. For instance, such a situation occurs in the case of a live recording such that the sound of hand clapping of the audience or a narration of the player has been recorded in the interval between programs, or the like. There is also a case where the time of the interval between programs cannot be detected because it is too short. The above situation will now be explained with reference to Figs. 3(a) and (b). Fig. 3(a) shows the audio signal. Although the audio signal is a digital signal as mentioned above, it is shown in an analog manner for convenience of explanation.

Fig. 3(b) shows the program number data. An interval between 02 and 03 denotes an interval between the second and third programs. A level of the audio signal is set to a value higher than a predetermined level (shown by an alternate long and short dash line in the diagram). As for the program number data after the recording, therefore, the interval between the second and third programs cannot be detected as shown in Fig. 3(c), so that a change in program number cannot be detected and there occurs an inconvenience such that the program numbers are set to the same value of 02.

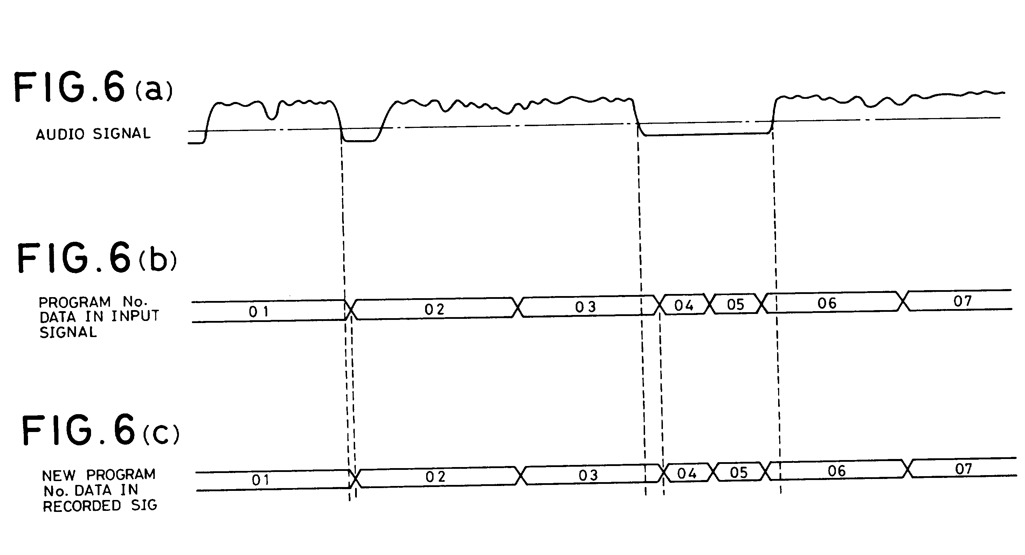

Fig. 4 shows another prior art of the detection of an interval between programs. In this prior art, the program number data is detected in place of the detection of the sound volume level of the audio signal. That is, in Fig. 4, a subcode detecting circuit 10 separates a subcode from an output signal of the input signal decoding circuit 2 and detects program head search data of the P channel and program number data of the Q channel. When the program number of the program number data changes, the subcode detecting circuit 10 generates a program number change signal and supplies to the program interval detecting circuit 8. By receiving the program number change signal, the detecting circuit 8 supplies a program number change signal to the subcode producing circuit 9.

Since the other portions in Fig. 4 are the same as those shown in Fig. 1, the same constructing portions are designated by the same reference numerals and execute the same operations, respectively.

The operation of the program interval detecting circuit 8 in the prior art of Fig. 4 will now be described with reference to a flowchart of Fig. 5.

A check is first made to see if the recording apparatus has been set into the recording mode or not (step S10). If YES, a check is made to see if the program number has been changed or not on the basis of the signal from the subcode detecting circuit 10 (step S11). If YES, the program number change command is supplied to the subcode producing circuit 9 (step S12).

In Figs. 6(a) and 6(b), the levels of the audio signals in the periods of time corresponding to the program Nos. 04 and 05 are shown to be low since the fourth and fifth programs indicated by the program Nos. 04 and 05 are not recorded but are jumped and the next sixth program is recorded and the audio signals are muted during the jumping operation for this purpose.

There occurs a problem, however, such that the program Nos. 04 and 05, which should not be recorded, are erroneously recorded in the program number data of a recorded signal as seen from Fig. 6(c). This is because the input signal includes the program number data even during the jumping operation.

In JP 1 251 361, a digital audiosignal recording apparatus (DAT) detects the leading edge of a silent portion between pieces of music, to indicate the timing of the track start ID. However, the signal for setting the start ID is triggered by the sub-code, and the volume level signal is ignored at this stage.

It is an object of the invention to provide a digital audio signal recording apparatus for recording digital audio signals while accurately detecting an interval between programs independently of a sound volume level of the interval between programs and even in the case where subcodes associated with program information have discontinuous program number data.

According to the invention, there is provided a digital audio signal recording apparatus having separating means for decoding input encoded data having main codes indicative of a digital audio signal constructed by a plurality of audio programs and subcodes including program number data corresponding to the audio programs and for separating the main codes and the subcodes, subcode producing means for receiving a program number change command, for correcting the subcodes, and thereby producing new subcodes, and format forming means for obtaining a format signal by combining the new subcodes and the main codes in accordance with a predetermined format, in which the format signal is modulated and recorded onto a recording medium,
wherein the apparatus comprises: program number change detecting means for detecting a program number change time point of the program number data contained in said subcode and for producing a program number change signal; sound volume detecting means for producing an effective level signal when a sound volume level of the digital audio signal is equal to or higher than a predetermined value; and program number change instructing means for giving the program number change command to the subcode producing means when both of the program number change signal and the effective level signal have been produced.

In the digital audio signal recording apparatus of the invention, the subcodes are separated from the main codes included in the input signal, and when both of the program number change signal indicative of the program number change time point of the program number data and the effective level signal indicating that the sound volume level of the digital audio signal is equal to or higher than the predetermined value have been produced, new subcodes including a change in program number are produced and combined with the main codes and, thereafter, they are modulated and recorded onto the medium.

Other preferred features are set forth in the claims.
Figs. 1 and 4 are block diagrams showing a prior art;
Figs. 2 and 5 are flowcharts showing the operations of the prior arts of Figs. 1 and 4;
Figs. 3(a), 3(b), 3(c), 6(a), 6(b), and 6(c) are waveform diagrams showing changes in program numbers in the recording mode according to the prior art in Figs. 1 and 4;
Fig. 7 is a block diagram showing an embodiment of the invention;
Fig. 8 is a flowchart showing the operation of the apparatus of Fig. 7; and
Figs. 9(a) through 9(e) are waveform diagrams showing changes in program numbers in the recording mode by the apparatus of Fig. 7.

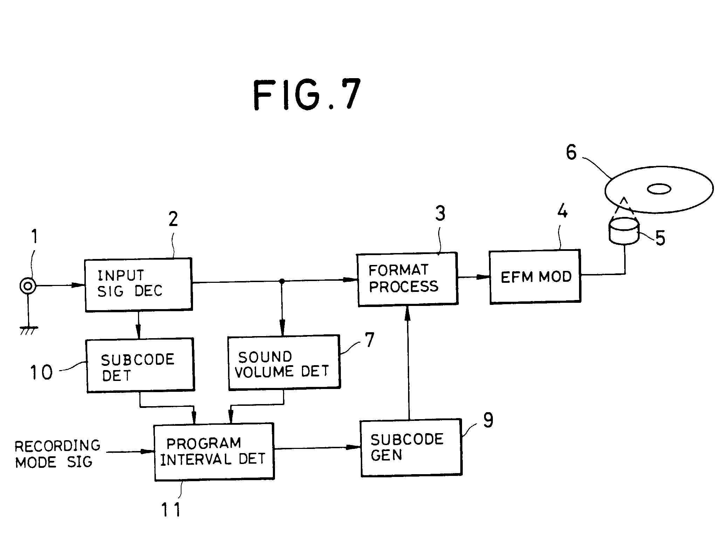

An embodiment of the invention will be described in detail hereinbelow. Fig. 7 is a block diagram of the embodiment of the invention and the same constructing portions as those in Figs. 1 and 4 are designated by the same reference numerals and execute the same operations, respectively. A program interval detecting circuit 11 receives the program number change signal from the subcode detecting circuit 10 and the effective level signal from the sound volume detecting circuit 7 and gives a program number change command to the subcode producing circuit 9.

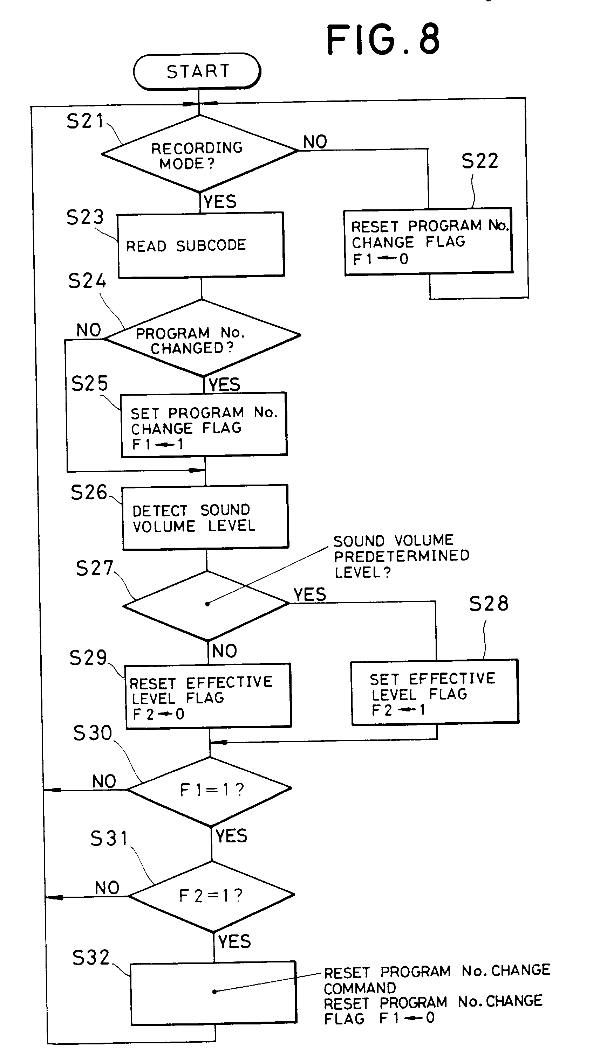

The operation of the program interval detecting circuit will be described with reference to a flowchart of Fig. 8.

In step S21 in the flowchart, a check is made to see if the recording operation is being executed or not. If NO, a program number change flag F₁ is reset to "0" (step S22) and the processing routine is returned to step S21. If YES in step S21, the Q and P channels of the subcode are read and a change in program number is detected (step S23). A check is now made to see if the program number has been changed or not (step S24). If YES, the program number change flag F₁ is set to "1" (step S25). Then, step S26 follows. If there is no change in program number, step S26 follows.

In step S26, a sound volume level of the audio signal is detected and a check is made to see if the sound volume level is equal to or higher than a predetermined level or not (step S27). If it is equal to or higher than the predetermined level, an effective level flag F₂ is set to "1" (step S28). If the sound volume level is lower than the predetermined level, the effective level flag F₂ is reset to "0" (step S29).

A check is now made to see if the flag F₁ has been set to "1" or not (step S30). If YES, a check is made to see if the flag F₂ has been set to "1" or not (step S31). If YES in step S31, the program number change command is given to the subcode producing circuit 9 and the flag F₁ is further set to "0" (step S32). The processing routine advances to step S21 and the subsequent processing steps are executed. If it is determined that both of the flags F₁ and F₂ have been set to "0" in steps S30 and S31, the processing routine advances to step S21 and the subsequent processing steps are executed.

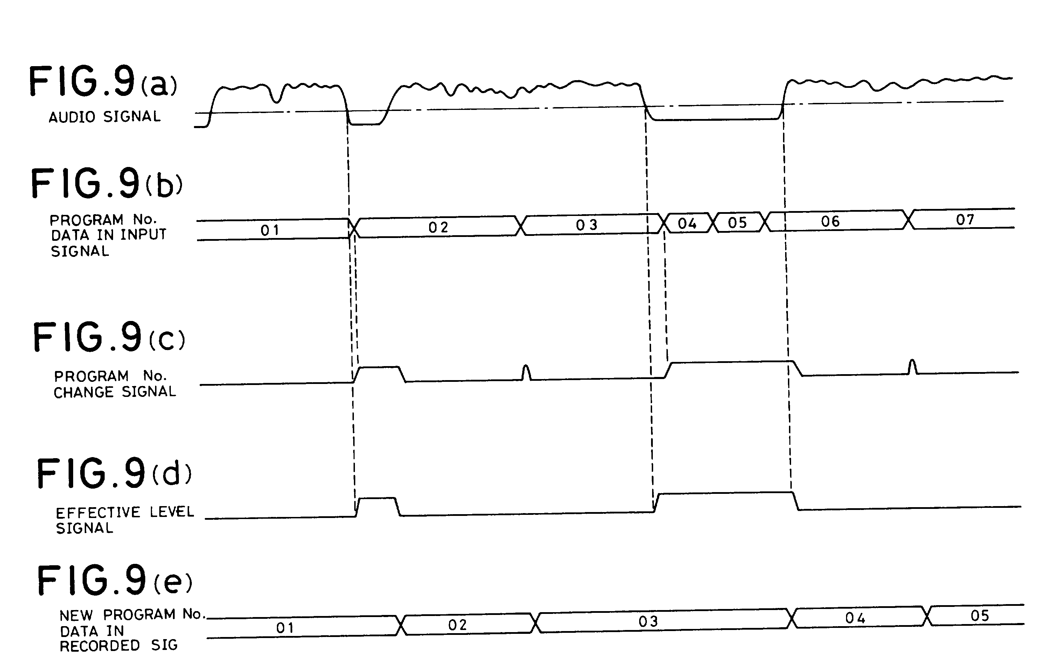

The above operation will now be described with reference to a timing chart of Fig. 9.

Fig. 9(c) shows a program number change signal. The program number change is indicated by the high level. Fig. 9(d) shows an effective level signal and the effective level is indicated by the low level. When the program number in the input signal in Fig. 9(b) has been changed from 01 to 02, the program number change signal is changed from the low level to the high level (F₁ = 1). The level of the audio signal in Fig. 9(a) is lower than a predetermined level and the effective level signal is changed from the low level to the high level. When the audio signal level is equal to or higher than the predetermined level, the effective level signal is changed from the high level to the low level (F₂ = 1). The program number change command is now generated, the new subcode is produced, and the program number after the recording is changed from 01 to 02 as shown in Fig. 9(e). The program number change signal is reset to the low level.

When the program number is subsequently changed from 02 to 03 in Fig. 9(b), the program number change signal is changed from the low level to the high level. The effective level signal, however, is maintained to the low level, i.e., the effective level. The program number change command is consequently generated, the new subcode is produced, and the program number after the recording is changed from 02 to 03.

In the jumping operation in which the program number is changed from 03 to 04 and 05 in Fig. 9(b), the effective level signal is first changed to the high level and the program number change signal is changed to the high level. This is because before the head of the program of the program No. 04 is searched by the start of the jumping operation, in a player of a recording medium (not shown), only the audio signal as main codes is muted by a control signal such as a disable command or the like. The effective level signal, therefore, is held to the high level (F₂ = 0) for a period of time of the jumping operation. Even if the program number has been changed from 03 to 04 and from 04 to 05, no program number change command is generated. The program number after the recording in Fig. 9(e), therefore, is also not changed but is maintained to 03. The reason why the program number change signal is not changed in an interval between 04 to 05 in Fig. 9(b) is because the resetting operation by the program number change command is not performed. When the jumping operation is subsequently finished by the detection of the program number 06, the effective level signal is changed to the low level, the program number change command is generated, and the program number change signal is reset. Since the program number after the recording at that time is the next number of 03 as shown in Fig. 9(e), it is set to 04.

By combining the program number change signal which is derived from the subcode and the effective level signal which is obtained by detecting the sound volume level of the audio signal, it is possible to execute a dubbing process for the recording signal having the program number data according to the order of the program to be recorded.

Although a disc has merely been used as a recording medium in the embodiment, it is possible to use any type of disc on which data can be written (recorded) such as WO type in which data can be written only once, RW type in which data can be rewritten, and the like. The invention is not limited to the disc but can also further use a magnetic recording medium such as a DAT (digital audio tape).

A recording medium on the source side is also not limited to a CD (including CD-ROM) and a DAT but can use a recording medium on which the formatted signal comprising main codes and subcodes has been recorded.

As described above, in the digital audio signal recording apparatus according to the invention, the subcodes are separated from the main codes included in the input signal, and when both of the program number change signal indicative of the program number change time point of the program number data and the effective level signal indicating that the sound volume level of the digital audio signal is equal to or higher than a predetermined value have been generated, the new subcode including the change in program number is produced. After the new subcode was combined with the main code, the resultant signal is modulated and recorded onto the medium. Thus, even in the case where the input signal accompanied with the discontinuous program number data is supplied irrespective of the sound volume level of the interval between programs and as in the case where arbitrary programs are selected and recorded at random, subcodes including the program number data according to the recording order are produced while accurately detecting the interval between programs and are added to the main codes and can be recorded.

## Claims

1. A digital audio signal recording apparatus having separating means (2) for decoding input encoded data having main codes indicative of a digital audio signal constructed by a plurality of audio programs and subcodes including program number data corresponding to the audio programs and for separating said main codes and said subcodes, subcode producing means (9) for receiving a program number change command, for correcting the subcode and thereby producing a new subcode, and format forming means (3) for obtaining a format signal by combining said new subcode and said main code in accordance with a predetermined format, in which said format signal is modulated and recorded onto a recording medium (4, 5), comprising:
program number change detecting means (10) for detecting a program number change time point of the program number data contained in said subcode and for producing the program number change signal;
sound volume detecting means (7) for producing an effective level signal when a sound volume level of said digital audio signal is equal to or higher than a predetermined value; and characterised by
program number change instructing means (11) for giving the program number change command to the subcode producing means (9) when both of the program number change signal and the effective level signal have been produced.

2. An apparatus according to claim 1, characterised in that first when the effective level signal has lasted for a period of time, then the program number change instructing means (11) gives the program number change command to the subcode producing means (9).

## Patentansprüche

1. Aufzeichnungsgerät für digitale Tonsignale mit einer Trenneinrichtung (2) zum Decodieren von codierten Eingangsdaten mit Hauptcodes, die ein digitales Tonsignal anzeigen, das aus einer Vielzahl von Tonprogrammen besteht, und mit Hilfscodes, die Programmnummerndaten aufweisen, die den Tonprogrammen entsprechen, und zum Trennen der Hauptcodes und der Hilfscodes, mit einer Hilfscodeerzeugungseinrichtung (9) zum Empfangen eines Programmnummernänderungsbefehls, zum Korrigieren des Hilfscodes und. dadurch, zum Erzeugen eines neuen Hilfscodes und mit einer Formatbildungseinrichtung (3) zum Erzeugen eines Formatsignals durch Kombinieren des neuen Hilfscodes und des Hauptcodes entsprechend dem vorbestimmten Format, in dem das Formatsignal moduliert und auf einem Aufzeichnungsträger (4, 5) aufgezeichnet wird, mit:
einer Programmnummernänderungsermittlungseinrichtung (10) zum Ermitteln eines Programmnummernänderungszeitpunkts der Programmnummerndaten, die in dem Hilfscode enthalten sind, und zum Erzeugen des Programmnummernänderungssignals;
einer Lautstärkeermittlungseinrichtung (7) zum Erzeugen eines Effektivpegelsignals, wenn ein Lautstärkepegel des digitalen Tonsignals größer oder gleich einem vorbestimmten Wert ist; und gekennzeichnet durch
eine Programmnummernänderungsanweisungseinrichtung (11) zum Erteilen des Programmnummernänderungsbefehls an die Hilfscodeerzeugungseinrichtung (9), wenn sowohl das Programmnummernänderungssignal als auch das Effektivpegelsignal erzeugt worden sind.

2. Gerät nach Anspruch 1, dadurch gekennzeichnet. daß dann, wenn das Effektivpegelsignal für eine Zeitdauer bestanden hat, die Programmnummernänderungsanweisungseinrichtung (11) den Programmnummernänderungsbefehl an die Hilfscodeerzeugungseinrichtung (9) erteilt.

## Revendications

1. Appareil d'enregistrement de signaux audio numériques, comprenant des moyens de séparation (2) pour décoder des données codées introduites qui comportent des codes principaux indiquant un signal audio numérique composé par une pluralité de programmes audio et de sous-codes comportant des données de numéro de programme correspondant aux programmes audio, et pour séparer lesdits codes principaux et lesdits sous-codes, des moyens (9) de génération de sous-codes pour recevoir une commande de changement de numéro de programme, pour corriger le sous-code et pour engendrer ainsi un nouveau sous-code, et des moyens (3) d'établissement de formats pour obtenir un signal de format en combinant le nouveau sous-code et le code principal en accord avec un format prédéterminé, moyens dans lesquels le signal de format est modulé et enregistré sur un support d'enregistrement (4, 5),
ledit appareil comprenant :
des moyens (10) de détection d'un changement de numéro de programme aptes à détecter un moment de changement de numéro de programme dans les données de numéro de programme contenues dans le sous-code et pour engendrer le signal de changement de numéro de programme ;
des moyens (7) de détection du volume du son pour produire un signal de niveau effectif lorsque le niveau du volume du son du signal audio numérique est égal ou supérieur à une valeur prédéterminée;
ledit appareil étant caractérisé par :
des moyens (11) de commande d'un changement de numéro de programme pour transmettre la commande de changement de numéro de programme aux moyens (9) de génération du sous-code lorsque aussi bien le signal de changement de numéro de programme que le signal de niveau effectif ont été engendrés.

2. Appareil selon la revendication 1,
caractérisé en ce que, lorsque le signal de niveau effectif a été présent pendant un certain temps, les moyens (11) de commande d'un changement de numéro de programme transmettent la commande de changement de numéro de programme aux moyens (9) de génération d'un sous-code.
